# EUROPÄISCHE PATENTANMELDUNG

(11) **EP 0 547 322 A1**
(43) Veröffentlichungstag der Anmeldung: **23.06.1993**
(21) Anmeldenummer: 92117419.9
(22) Anmeldetag: 12.10.1992
(51) Int. Cl.: B23K 11/25

(54) **Verfahren zur Überwachung der Schweissqualität beim Quetschnahtschweissen**

(30) Priorität: 16.12.1991 CH 3713/91
(71) Anmelder: ELPATRONIC AG, CH-6300 Zug (CH)
(72) Erfinder: Schreiner, Jürg, CH-8413 Neftenbach (CH); Weibel, Peter, CH-8547 Gachnang (CH)

(57) **Zusammenfassung**

Beim Quetschnahtschweissen von Blechtafeln (11, 12) mit überlappten Rändern zwischen Elektrodenrollen (13, 14) ist die Qualität der Schweissung - bei Einhaltung bzw. Regelung der Prozessparameter (Presskraft F der Elektrodenrollen, Vorschubgeschwindigkeit v, Stromstärke I durch die Schweissstelle) - auch von der an der Schweissstelle vorhandenen Ueberlappungsbreite (b) der Blechränder abhängig. Da es schwierig ist, die tatsächliche Ueberlappung in der Produktion zu messen, wird ersatzweise die Dicke (ts) der Schweissnaht erfasst. Diese Dicke steht bei gegebenen Werkstückdaten und zugeordneten Schweissparametern in direktem Zusammenhang mit der Ueberlappungsbreite (b). Der Funktionszusammenhang ts = f(b) kann empirisch ermittelt werden und erlaubt die Bestimmung des Istwertes der Ueberlappung aufgrund der gemessenen Nahtdicke. Die Dickenmessung kann entweder an der Schweissstelle durch Abstandmessung der Elektrodenrollen (Weggeber 16) oder an der fertigen Schweissnaht (Messeinrichtung 17) vorgenommen werden. - Anstelle des Zusammenhangs ts = f(b) kann auch der Zusammenhang von ts mit einer anderen Betriebsgrösse in analoger Weise ausgewertet werden.

## Beschreibung

Beim Quetschnahtschweissen von Blechtafeln Zwischen Elektrodenrollen ist es für die Prozessregelung und Qualitätsüberwachung notwendig und üblich, mindestens die Betriebsgrössen
- Presskraft (F) der Elektrodenrollen,
- Vorschubgeschwindigkeit (v) und
- Stromstärke (I) durch die Schweissstelle
laufend zu messen bzw. zu regeln. Die Sollwerte dieser Grössen sind dabei - für ein gegebenes Werkstück - auf eine bestimmte Ueberlappungsbreite (b) der zu verschweissenden Tafelränder bezogen, die beim Ausrichten und Festspannen der Blechtafeln vor dem Schweissen eingestellt wird. Sämtliche vorgenannten, untereinander abhängigen Betriebsgrössen sollen innerhalb bestimmter Grenzen liegen, damit die geforderte Schweissqualität erzielt wird.

Eine "lückenlose" Messung bzw. Regelung der verschiedenen Betriebsgrössen während des Schweissbetriebes ist indessen nicht einfach, sondern kann - je nach Art der Grösse - mehr oder weniger problematisch sein. Man hat sich bisher u.a. damit beholfen, am durchlaufenden Werkstück sogleich nach Verlassen der Elektrodenrollen die Schweissnaht-Temperatur als "redundante" Grösse zu messen. Dies sollte in Verbindung mit anderen Messwerten der vorgenannten Bertriebsgrössen die Zuverlässigkeit der Qualitätsüberwachung erhöhen. Indessen ist eine solche Temperaturmessung, um verlässlich zu sein, ihrerseits an bestimmte Voraussetzungen gebunden, oder der Einbau der Messeinrichtung, z.B. eines Infrarot-Sensors, kann aus Platzgründen schwierig sein.

Für die Qualität der Schweissung bzw. die Ausbildung einer einwandfreien Schweisslinse im Nahtbereich ist es auch besonders wichtig, dass die zugrundegelegte Ueberlappungsbreite an der Schweissstelle auch tatsächlich vorhanden ist. Es können aber bereits Fehleinstellungen beim Ausrichten und Spannen der Blechtafeln bestehen oder Abweichungen beim Vorschub der Werkstücke zwischen den Elektrodenrollen eintreten. Eine Messung des Istwertes der Ueberlappung, zumal unmittelbar vor den Elektrodenrollen, ist allerdings sehr schwierig und scheint jedenfalls betriebsmässig (im Durchlauf) kaum realisierbar.

Mit der vorliegenden Erfindung soll, in Verbindung mit dem eingangs genannten Quetschnahtschweissen, ein industriell einsetzbares Verfahren vorgeschlagen werden, mit welchem die Möglichkeiten der betrieblichen Qualitätskontrolle erheblich erweitert werden. Diese Aufgabe wird erfindungsgemäss dadurch gelöst, dass während dem Schweissvorgang die Schweissnahtdicke erfasst wird, und dass aufgrund eines vorgegebenen Zusammenhangs der Nahtdicken-Messwerte mit einer der eingangs genannten - untereinander abhängigen - Betriebsgrössen ein Kriterium für die Schweissqualität abgeleitet wird.

Zur Erfassung der Dicke der Schweissnaht bestehen verschiedene, bewährte Möglichkeiten, und die Eichung bietet keine besonderen Schwierigkeiten. Die Dicke der Naht kann am auslaufenden Werkstück direkt oder indirekt gemessen werden, aber auch am "Entstehungsort" durch Abstands- bzw. Wegmessung an den Elektrodenrollen. Im letzteren Fall kann eine Korrektur erforderlich sein für Dickenänderungen, die bei der Erstarrung und Abkühlung des Nahtbereiches auftreten, jedoch wird man dies normalerweise beim Ermitteln des zu benützenden, spezifischen Funktionszusammenhangs bereits berücksichtigen.

Bei der Durchführung des erfindungsgemässen Verfahrens kann man so vorgehen, dass man ein Kriterium durch Vergleich der Nahtdicken-Messwerte mit Werten der anderen Betriebsgrösse ableitet, wobei jene Werte aus dem (jeweils benützten) vorgegebenen Zusammenhang ermittelt werden. Man kann jedoch auch direkt Sollwert-Istwert-Vergleiche der Schweissnahtdicke selst durchführen, wobei die Sollwerte durch den genannten Zusammenhang gegeben sind.

Der jeweils benützte Zusammenhang kann - bei gegebenen Werkstück- und Betriebsparametern - im voraus empirisch bestimmt werden. Besonders geeignet ist das erfindungsgemässe Verfahren für die betriebsmässige Bestimmung des Istwertes der Ueberlappungsbreite der Tafelränder, welcher Wert, wie weiter oben ausgeführt, kaum direkt messbar ist.

Verschiedene Ausführungsvarianten des im Patentanspruch 1 definierten Verfahrens sind in den abhängigen Ansprüchen angegeben. Nachstehend wird die Erfindung anhand von Ausführungsbeispielen in Verbindung mit der Zeichnung näher erläutert, wobei der Zusammenhang zwischen der Schweissnahtdicke und der Ueberlappungsbreite im Vordergrund steht.
- Fig. 1: ist die Prinzipdarstellung einer Quetschnaht-Schweisseinrichtung mit Elektrodenrollen und einem in Schweissung begriffenen Werkstück,
- Fig. 2: zeigt schematisch in Stirnansicht zwei überlappte Blechtafeln vor der Schweissung,
- Fig. 3: zeigt analog die durch die Schweissnaht verbundenen Bleche, und
- Fig. 4: veranschaulicht einen typischen, empirisch ermittelten Funktionszusammenhang zwischen der Ueberlappungsbreite b und der Schweissnaht-Dicke ts.

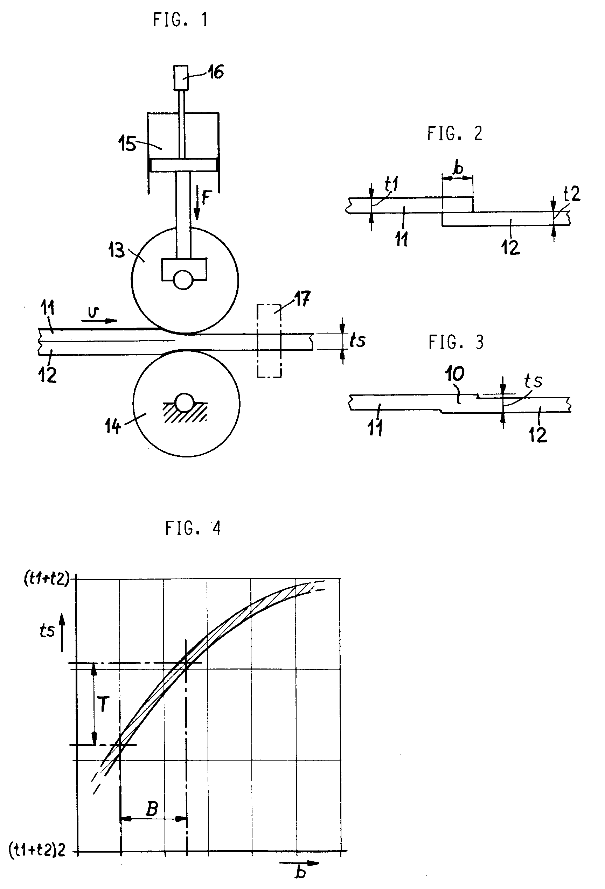

Die stark vereinfacht und schematisch dargestellte Schweisseinrichtung nach Fig. 1 mit Elektrodenrollen 13 und 14 dient zum Quetschnahtschweissen (eine Form der elektrischen Widerstandsschweissung) von Blechtafeln 11 und 12. Die zu verschweissenden Blechtafeln werden mit überlappenden Rändern gemäss Fig. 2 ausgerichtet und eingespannt und dann mit einer Geschwindigkeit v zwischen den Elektrodenrollen 13, 14 hindurchgeführt. Wie in Fig. 1 angedeutet, ist die untere Elektrodenrolle 14 feststehend angenommen, während die obere Rolle 13 zustellbar ist, wobei die Presskraft F beispielsweise von einem hydraulischen Zylinderaggregat 15 aufgebracht wird. Während dem Schweissvorgang werden in an sich bekannter Weise die Betriebsgrössen - Presskraft (F) der Elektrodenrollen 13, 14, Vorschubgeschwindigkeit (v) des Werkstücks und Stromstärke (I) durch die Schweissstelle - laufend gemessen und normalerweise geregelt, wobei diese Grössen auf den vorgegebenen Sollwert der Ueberlappungsbreite b der Tafelränder bezogen sind. Beim Verschweissen der Blechränder, bewirkt durch den Stromdurchgang zwischen den Elektrodenrollen und die entsprechende Erwärmung des zwischenliegenden Blechmaterials in der sogenannten Schweisslinse, wird das Material durch die Presskraft F gleichzeitig verformt, und es entsteht eine Quetschnaht 10 (Fig. 3), deren Dicke ts erheblich geringer ist als die Summe der Blechdicken t1 und t2 (diese Blechdicken können verschieden sein). Das Ausmass der Materialverformung ist abhängig von den drei vorgenannten Betriebsgrössen und der tatsächlichen Ueberlappungsbreite b (Istwert) an der Schweissstelle. Ausser den drei genannten Betriebsgrössen können während dem Schweissen weitere Grössen, beispielsweise die Temperatur der Naht 10 am Austritt zwischen den Elektrodenrollen, gemessen und allenfalls geregelt werden.

Die laufend erfassten Istwerte der Betriebsgrössen bilden ein wichtiges Kriterium bei der Qualitätskontrolle, d.h. bei unzulässigen Abweichungen solcher Istwerte muss auf ungenügende Schweissqualität geschlossen und das betreffende Werkstück ausgeschieden werden. Wie weiter oben ausgeführt, ist jedoch die tatsächliche Ueberlappungsbreite b im Betrieb praktisch nicht messbar. Um sichere Rückschlüsse auf den Istwert der Ueberlappungsbreite und damit auf die Schweissqualität des Werkstücks ziehen zu können, wird erfindungsgemäss von einem bestimmten Zusammenhang zwischen der Ueberlappungsbreite b und der Dicke ts der Schweissnaht 10 Gebrauch gemacht, wie er in Fig. 4 für einen konkreten Fall als Beispiel dargestellt ist. Der benützte Zusammenhang zwischen Ueberlappungsbreite und resultierender Nahtdicke lässt sich für verschiedene Werkstück- und Betriebsparameter voraus empirisch bestimmen. Es hat sich erwiesen, dass dieser Zusammenhang - zumindest in den für die Fertigung in Betracht kommenden Bereichen - immer eindeutig ist, weshalb die Nahtdicke sich ausgezeichnet als Ersatzgrösse für die Ueberlappungsbreite eignet. Es wird also am Werkstück die Dicke ts der Schweissnaht gemessen und über diesen Zusammenhang der Istwert der Ueberlappungsbreite b bestimmt. Um für die Qualitätsüberwachung ein eindeutiges Kriterium "Gut/Ausschuss" zu haben, kann man bei der Nahtdicke einen Toleranzbereich T festlegen, dem ein Toleranzbereich B der Ueberlappung entspricht. Das vorerwähnte Kriterium kann entweder dadurch abgeleitet werden, dass man beurteilt, ob die ermittelten b-Werte im Toleranzbereich B liegen oder nicht, oder indem man direkt beurteilt, ob die ts-Werte im Toleranzbereich T (Sollwertbereich) liegen oder nicht.

Der verwendete Zusammenhang ts = f(b) wird über den interessierenden Bereich bei gegebenen Werkstückdaten (Blechdicken, Material usw.) und zugehörigen Betriebsparametern jeweils im voraus durch geeignete Versuchsreihen ermittelt. Für die Messung der Dicke ts während dem Schweissvorgang gibt es verschiedene Möglichkeiten. Wie in Fig. 1 angedeutet, kann der Abstand der Elektrodenrollen 13, 14 bzw. die Stellung der zustellbaren Rolle 13 mit einem Stellungsgeber 16 (Wegaufnehmer) automatisch gemessen werden. Man kann jedoch auch an der erstarrten Schweissnaht 10 nach Verlassen der Elektrodenrollen an einer Stelle 17 die Nahtdicke nach einer an sich bekannten Methode messen, z.B. mittels Tastrollen oder berührungslos mittels Ultraschall- oder Strahlenabsorptions-Messung. Im einen wie im anderen Fall wird man ein von den entsprechenden Sensoren erzeugtes elektrisches Messsignal einer Auswerteschaltung (nicht dargestellt) zuleiten, wo der Messwert automatisch registriert, angezeigt und für die Qualitätsüberwachung ausgewertet wird. Bei dieser Auswertung wird es im allgemeinen zweckmässig sein, die Momentanwerte über die Nahtlänge (Werkstücklänge) oder über einen Teil derselben (z.B. Unterdrückung eines Anfangs- und Endabschnittes) zu mitteln bzw. für die Qualitätskontrolle statistisch auszuwerten. Selbstverständlich können für mehrere Werkstück- bzw. Betriebsparameter die zugehörigen, voraus ermittelten Funktionszusammenhänge in Form von Datentabellen abgespeichert werden, um nach Bedarf zur Verarbeitung in einem Rechner abgerufen zu werden.

Obwohl die vorstehend beschriebenen Ausführungsformen des Verfahrens sich auf den Zusammenhang Schweissnahtdicke/Ueberlappungsbreite beziehen, ist es durchaus möglich, auch vorgegebene Zusammenhänge zwischen ts und anderen Betriebsgrössen (z.B. F, v, I) in analoger Weise heranzuziehen.

## Patentansprüche

1. Verfahren zur Ueberwachung der Schweissqualität beim Quetschnahtschweissen von Blechtafeln (11, 12) zwischen Elektrodenrollen (13, 14), wobei Sollwerte mindestens für die Betriebsgrössen
- Presskraft (F) der Elektrodenrollen,
- Vorschubgeschwindigkeit (v),
- Stromstärke (I) durch die Schweissstelle,
- Ueberlappungsbreite (b) der Tafelränder
vorgegeben sind, dadurch **gekennzeichnet,** dass während dem Schweissvorgang die Schweissnahtdicke (ts) erfasst wird, und dass aufgrund eines vorgegebenen Zusammenhangs der Nahtdicken-(ts)-Messwerte mit einer der vorgenannten Betriebsgrössen ein Kriterium für die Schweissqualität abgeleitet wird.

2. Verfahren nach Anspruch 1, dadurch gekennzeichnet, dass ein Kriterium durch Vergleich der Nahtdicken-(ts)-Messwerte mit der aus dem genannten Zusammenhang ermittelten anderen Betriebsgrösse abgeleitet wird.

3. Verfahren nach Anspruch 1, dadurch gekennzeichnet, dass ein Kriterium durch Sollwert-Istwert-Vergleich der gemessenen Schweissnahtdicke (ts) selbst abgeleitet wird.

4. Verfahren nach Anspruch 1, dadurch gekennzeichnet, dass für den Messwert der Schweissnahtdicke (ts) ein Toleranzbereich (T) festgelegt wird.

5. Verfahren nach Anspruch 1, dadurch gekennzeichnet, dass der die Schweissnahtdicke (ts) bestimmende Abstand der Elektrodenrollen (13, 14) gemessen wird.

6. Verfahren nach Anspruch 1, dadurch gekennzeichnet, dass die Schweissnahtdicke (ts) am geschweissten Werkstück selbst gemessen wird.

7. Verfahren nach Anspruch 1, dadurch gekennzeichnet, dass die Messwerte der Schweissnahtdicke (ts) über mindestens einen Teil der Nahtlänge gemittelt und/oder statistisch ausgewertet werden.

8. Verfahren nach einem der vorangehenden Ansprüche, dadurch gekennzeichnet, dass zum Ableiten eines Kriteriums für die Schweissqualität ein vorgegebener Zusammenhang zwischen den Nahtdicken-(ts)-Messwerten und der Ueberlappungsbreite (b) benutzt wird.

9. Verfahren nach Anspruch 8, dadurch gekennzeichnet, dass aufgrund eines im voraus ermittelten Zusammenhangs der Istwert der Ueberlappungsbreite (b) bestimmt wird.
